# EUROPEAN PATENT APPLICATION

(11) **EP 1 199 624 A2**
(43) Date of publication of application: **24.04.2002**
(21) Application number: 01308752.3
(22) Date of filing: 15.10.2001
(51) Int. Cl.: G06F 1/00

(54) **Electronic authentication system, URL input system, URL input device, and data recording system**

(30) Priority: 16.10.2000 JP 2000315504; 16.10.2000 JP 2000315505
(71) Applicant: MATSUSHITA ELECTRIC INDUSTRIAL CO., LTD., Kadoma-shi, Osaka 571-8501 (JP)
(72) Inventor: Ueda, Masaaki, Katano-shi, Osaka-fu 576-0051 (JP); Oka, Takuya, Hirakata-shi, Osaka-fu 573-0084 (JP); Hatta, Takanori, Takatsuki-shi, Osaka-fu 569-0814 (JP); Takagi, Nobuya, Osaka-shi, Osaka-fu 533-0033 (JP); Muto, Yoshihiro, Ibaraki-shi, Osaka-fu 567-0011 (JP)
(74) Representative: Crawford, Andrew Birkby

(57) **Abstract**

A URL input device is connected to a WWW client device and helps the client device access a desired network object. The URL input device includes a URL storing unit, a URL displaying unit, a URL selection interface, and an access facilitating unit. The URL storing unit stores URLs for accessing network objects. The URL displaying unit displays the URLs. The URL selection interface has the user select a URL corresponding to the desired network object from the displayed URLs. The access facilitating unit facilitates the client device's access to the desired network object, by having the client device use the selected URL.

## Description

This application is based on applications Nos. 2000-315504 and 2000-315505 filed in Japan, the contents of which are hereby incorporated by reference.

### BACKGROUND OF THE INVENTION

### Field of the Invention

The present invention relates to improvements to data input techniques when accessing the WWW (World Wide Web) through a network.

### Related Art

With expansion of EC (electronic commerce) that conducts business over the WWW, the number of EC sites set up on the network is increasing in recent years. As a result, research is being performed into electronic authentication systems to assure security in EC. An electronic authentication system requires users to input IDs or passwords as authentication information. Such IDs and passwords tend to be long enough to prevent unauthorized access by malicious third parties. This, together with the labor required to input URLs (uniform resource locators) of many EC sites, makes data input troublesome for users who visit EC sites.

To eliminate the inconvenience of URL input, typical browser software for accessing the WWW registers the user's favorite URLs. Once a URL of a desired page has been registered, that page can be accessed by only a few mouse operations. However, to access a page whose URL is not registered, the user has to type the URL using a keyboard.

To eliminate the inconvenience of authentication information input, Japanese Laid-Open Patent Application No. H11-161717 discloses a method for placing an order for an item. According to this method, a client sends authentication information to a server, which in turn sends a client ID to the client. After this, the client sends the client ID instead of the authentication information, each time it accesses the server. This makes it unnecessary for the user to input a long ID or password after the first access, thereby reducing the trouble of inputting authentication information.

However, this technique is effective only when the authentication information has redundancy, and cannot be used if the authentication information does not have redundancy. Which is to say, when the buyer is required to input his/her address, name, credit card number, and the like as the authentication information in EC, these information can be replaced with the client ID. However, when the buyer is required to input only the credit card number and a password as the authentication information to access a credit card company that issued his/her credit card, these information cannot be replaced with a small piece of information such as the client ID, since these information is not particularly redundant.

Also, the client ID may be stored in a terminal in the form invisible to the user, like a cookie in the WWW. In this case, to access the server from another terminal that does not store the client ID, the user has to once again type the authentication information to obtain the client ID. Here, if the user is allowed to know the client ID and type it when accessing the server from another terminal, the level of security decreases.

### SUMMARY OF THE INVENTION

The present invention was conceived in view of the problems described above, and has a primary object of providing an electronic authentication system which makes it easy for users to perform data input/output when accessing the WWW, and in particular saves the inconvenience of having to input URLs and authentication information.

To ease URL input, the present invention is a uniform resource locator (URL) input device including: a terminal device connecting unit which is connected to a terminal device that accesses a network object; a URL reading unit for reading a URL corresponding to the network object from a URL storage device; and an access facilitating unit for facilitating the access by the terminal device, by having the terminal device use the read URL.

For example, an IC card storing URLs is inserted to a PDA that is equipped with an IC card reader, and the PDA is connected to a PC. With this construction, the PC can access a network object corresponding to a URL which is read from the IC card by the PDA. This saves the user the trouble of typing the URL.

To ease authentication information input, the present invention is an electronic authentication system including a server device, a terminal device, and an external storage device, the server device executing authentication, the terminal device being connected to the server device via a network, and the external storage device being connected to the terminal device, the external storage device including: an authentication information storing unit for storing authentication information, the server device including: an authentication command sending unit for sending an authentication command to the terminal device, the authentication command instructing the terminal device to read the authentication information from the external storage device and send the read authentication information to the server device; and an authentication information receiving unit for receiving the authentication information from the terminal device, and the terminal device including: a reading unit for reading the authentication information from the external storage device according to the authentication command; and a sending unit for sending the read authentication information to the server device according to the authentication command.

According to this construction, the server device has the terminal device send the authentication information stored in the external storage device. This saves the user the trouble of typing the authentication information. Also, the authentication information can be automatically input regardless of which terminal device is used.

Which is to say, if an electronic file containing URLs is stored in a recording medium such as a floppy disk, to access a desired page from a terminal device the terminal device needs to be equipped with a device for reading information from the recording medium (e.g. a floppy disk drive device). The invention, however, provides the IC card reader itself that can read such URLs from the IC card. Therefore, the user can access the desired page from any terminal device using the IC card reader which he/she carries, even if an IC card reader is not equipped in the terminal device.

### BRIEF DESCRIPTION OF THE DRAWINGS

These and other objects, advantages and features of the invention will become apparent from the following description thereof taken in conjunction with the accompanying drawings which illustrate specific embodiments of the invention.

In the drawings:
FIG. 1 shows a construction of an electronic authentication system to which the embodiments of the present invention relate;
FIG. 2 shows a construction of a WWW client device shown in FIG. 1;
FIG. 3 shows an outward appearance of a PDA shown in FIG. 2;
FIG. 4 shows a device construction of the PDA;
FIG. 5 shows a device construction of an IC card shown in FIG. 2;
FIG. 6 is a flowchart showing an operational procedure of the electronic authentication system;
FIG. 7 is a flowchart showing an operation of a browser equipped in the WWW client device;
FIG. 8 is a flowchart showing an operation of the PDA;
FIG. 9 is a flowchart showing an operation of the IC card;
FIG. 10 shows a URL memory buffer provided on an EEPROM in the IC card;
FIG. 11 shows a software construction of the PDA;
FIG. 12 is a flowchart showing an operation of a PC shown in FIG. 2, when the PDA is connected to the PC;
FIG. 13 shows an authentication information memory buffer provided on the EEPROM in the IC card;
FIG. 14 shows an example display screen of trade information displayed by the browser;
FIG. 15 shows a software construction of the PDA which relates to a data management program;
FIG. 16 shows a data memory buffer provided on the EEPROM in the IC card;
FIG. 17 is a flowchart showing an operation of the data management program, when receiving input information from an input panel handler shown in FIG. 15;
FIG. 18 shows a display data buffer provided on a RAM in the PDA;
FIG. 19 is a flowchart showing an operation of a display panel driver that accompanies scroll operations;
FIG. 20 is a sequence diagram showing a procedure of updating authentication information;
FIG. 21 shows a URL memory buffer provided on the EEPROM in the IC card;
FIG. 22 is a flowchart showing an operational procedure of storing URLs in the URL memory buffer;
FIG. 23 is a flowchart showing an operation of the PDA when storing URLs into the URL memory buffer; and
FIG. 24 is a flowchart showing an operation of the PDA when designating a URL.

### DESCRIPTION OF THE PREFERRED EMBODIMENTS

The following describes embodiments of an electronic authentication system of the present invention, by referring to the drawings.

### [1] First Embodiment

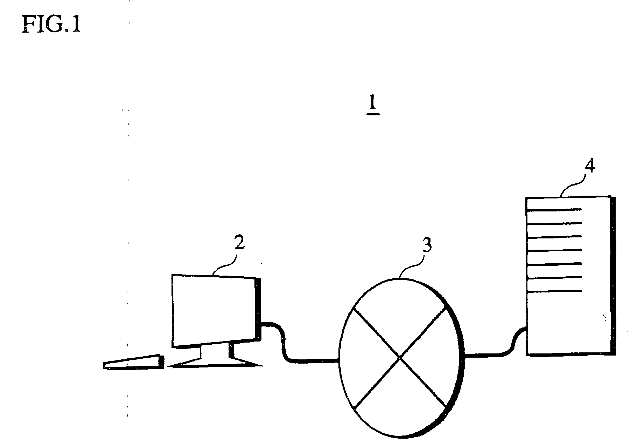

FIG. 1 shows a construction of an electronic authentication system (hereinafter simply referred to as "authentication system") to which the first embodiment of the present invention relates. An authentication system 1 has the following construction. A WWW client device (hereafter "terminal") 2 and a WWW server device (hereafter "server") 4 are connected to each other via a network 3. The terminal 2 is equipped with a WWW browser (hereafter "browser"). When the terminal 2 designates a URL of the server 4 and requests a home page from the server 4, the server 4 launches an electronic authentication procedure for the terminal 2.

The term URL refers to a notation used for specifying a location of a network object (e.g. files, newsgroups, Telnet sites, and other tools and various resources) on a network such as the Internet, or to a location specified by such a notation. In this specification, the term is mainly used to refer to the latter.

### [1-1] Construction of Each Device

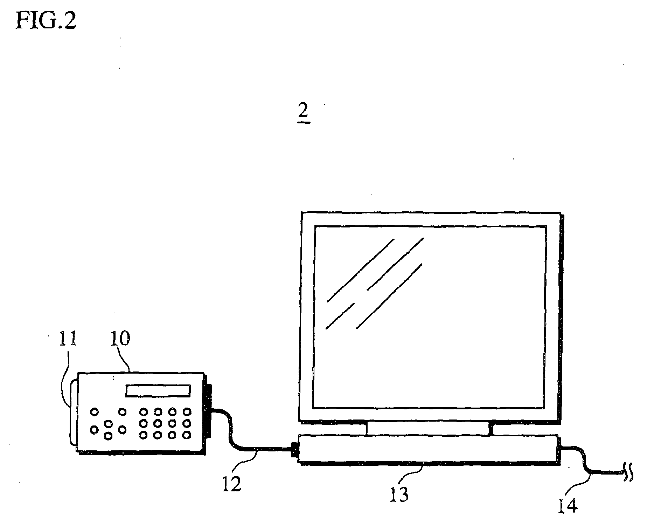

FIG. 2 shows a construction of the terminal 2. The terminal 2 includes a PDA (personal digital assistant) 10 and a PC (personal computer) 13 which are connected to each other by a USB (universal serial bus) cable 12. The PC 13 is also connected to the network 3 via a cable 14. The PDA 10 is a contact-type IC card reader/writer to which a contact-type IC card 11 is inserted.

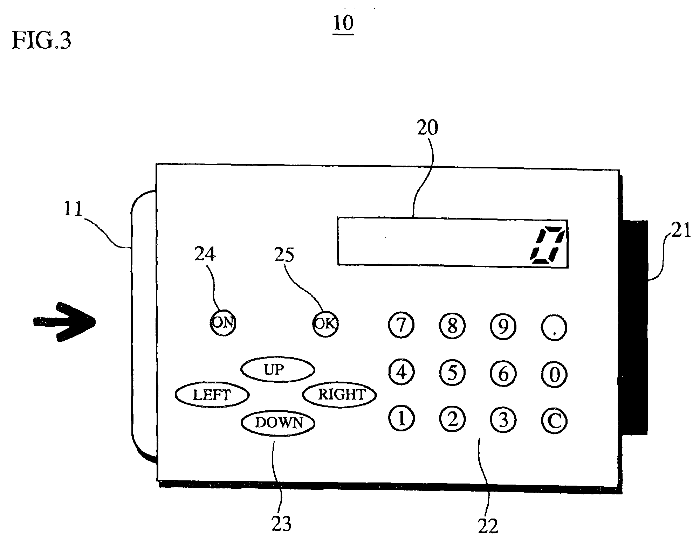

FIG. 3 shows an outward appearance of the PDA 10. The PDA 10 has an IC card insertion slot (not illustrated) on the left side. The IC card 11 is inserted in this IC card insertion slot. Also, the PDA 10 has a connector 21 for connecting to the USB cable 12 on the right side. A display panel 20, a numeric keypad 22, and four cursor keys 23 made up of UP, DOWN, LEFT, and RIGHT buttons are provided on the main surface of the PDA 10, together with an ON button 24 and an OK button 25. Note that the numeric keypad 22, the cursor keys 23, the ON button 24, and the OK button 25 form an input panel.

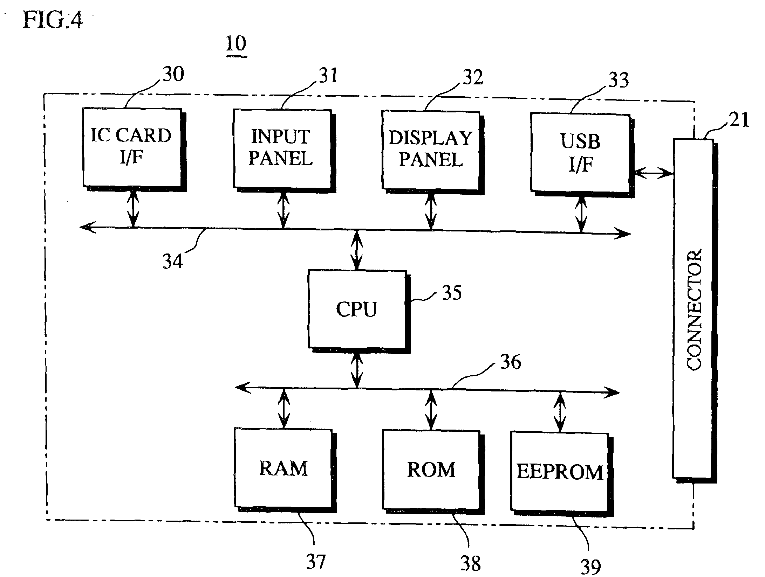

FIG. 4 shows a device construction of the PDA 10. The PDA 10 has the following construction. A CPU (central processing unit) 35 is connected to an IC card interface 30, an input panel 31, a display panel 32, and a USB interface 33 via an internal bus 34. The USB interface 33 is connected to the connector 21.

The CPU 35 is also connected to a RAM (random access memory) 37, a ROM (read only memory) 38, and an EEPROM (electrically erasable programmable ROM) 39 via a memory bus 36. When the PDA 10 is not connected to the PC 13, the PDA 10 receives power supply from built-in batteries (not illustrated). When the PDA 10 is connected to the PC 13, the PDA 10 receives power supply from the PC 13 through the USB cable 12.

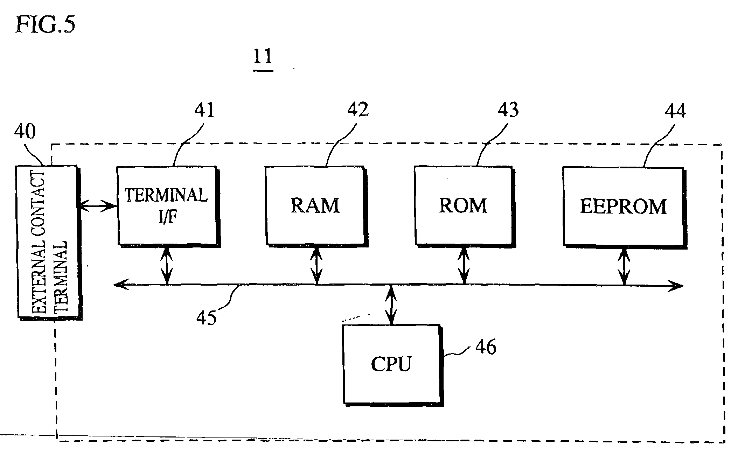

FIG. 5 shows a device construction of the IC card 11. The IC card 11 has the following construction. A terminal interface 41, a RAM 42, a ROM 43, an EEPROM 44, a CPU 46, and the like are connected via an internal bus 45. The PDA 10 accesses the EEPROM 44, via an external contact terminal 40 and the terminal interface 41.

The external contact terminal 40 is roughly made up of a Vcc terminal, a clock terminal, a ground terminal, a data input/output signal terminal, and a reset terminal. The Vcc terminal receives power supply from the PDA 10. The clock terminal receives clock signal supply. The data input/output signal terminal transfers data. The reset terminal enables the PDA 10 to reset the CPU 46.

### [1-2] Operational Procedure of Each Device

An operation of each of the above devices is explained below, with reference to flowcharts.

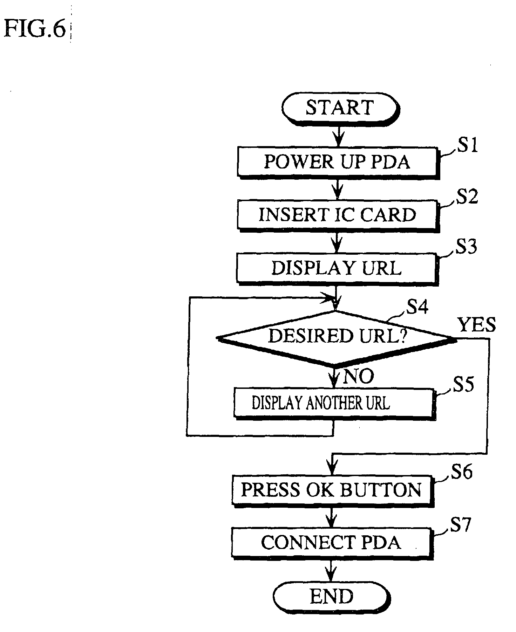

FIG. 6 is a flowchart showing an operational procedure of the authentication system 1. The user of the authentication system 1 presses the ON button 24 to activate the PDA 10 (S1), and inserts the IC card 11 which stores authentication information into the PDA 10 (S2). As a result, a URL is displayed on the display panel 20 (S3).

If the displayed URL is not a URL which the user wants to access (S4:NO), the user displays other URLs on the display panel 20 by operating the UP and DOWN buttons (S5). When the desired URL is displayed (S4:YES), the user presses the OK button 25 (S6) and connects the PDA 10 to the PC 13 using the USB cable 12 (S7). As a result, the PC 13 accesses the designated URL and requests data. Note that the PC 13 has been activated prior to this operational procedure.

When the PC 13 requests data, the server 4 sends an HTML (hypertext markup language) document to the PC 13. This HTML document contains a Java applet (Java is a registered trademark of Sun Microsystems, Inc). The browser of the PC 13 performs the following operation in accordance with the Java applet.

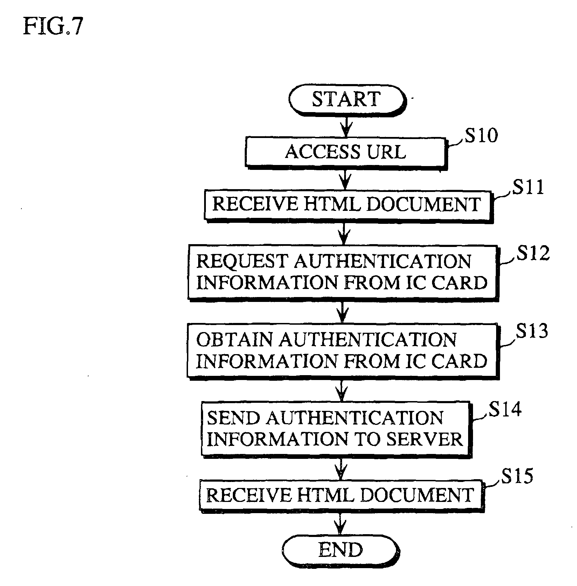

FIG. 7 is a flowchart showing the operation of the browser. First, the browser accesses the designated URL and requests the HTML document (S10). Upon receiving the HTML document (S11), the browser requests authentication information from the IC card 11, according to the Java applet contained in the received HTML document (S12).

Having obtained the authentication information from the IC card 11 (S13), the browser sends the authentication information to the server 4 (S14). If access is granted as a result of the server 4 authenticating the authentication information, the browser receives an HTML document from the server 4 (S15) and displays it. This HTML document which is sent from the server 4 after the grant of access is a specific HTML document that corresponds to the authentication information or an HTML document that contains specific data corresponding to the authentication information. If the authentication information is invalid, the browser cannot access this HTML document.

### [1-3] Operation of the PDA 10

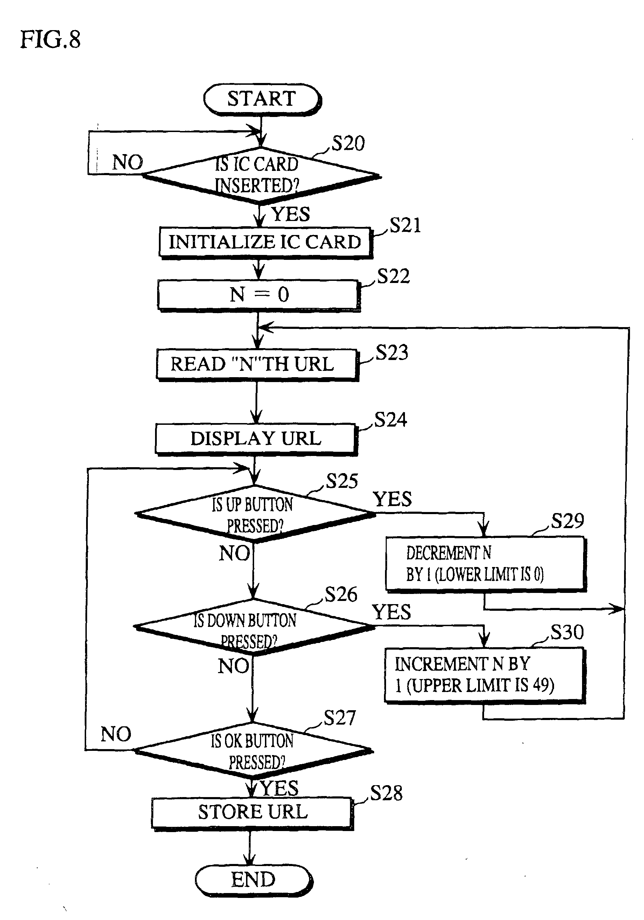

An operation of the PDA 10 is explained below. FIG. 8 shows the operation of the PDA 10. When the IC card 11 is inserted (S20:YES), the PDA 10 initializes the IC card 11 (S21). In other words, the PDA 10 applies a circuit voltage to the Vcc terminal, and supplies a clock signal to the clock terminal. The PDA 10 then inputs a reset signal to the reset terminal, to reset the CPU 46 of the IC card 11.

Following this, the PDA 10 initializes internal counter N to 0 (S22), and reads the "N"th URL from the IC card 11 (S23). The PDA 10 displays the read URL on the display panel 20 (S24). The PDA 10 then checks whether input is made through the input panel 31. If the UP button is pressed (S25:YES), the PDA 10 decrements N by 1, where the lower limit is 0 (S29).

If the judgement "NO" is given in step S25 and the DOWN button is pressed (S26:YES), the PDA 10 increments N by 1, where the upper limit is 49 (S30). The upper and lower limits of N, i.e., 49 and 0, correspond to the capacity of the IC card 11 that is capable of storing fifty URLs at the maximum.

If the judgement "NO" is given in step S26 and the OK button 25 is pressed (S27:YES), the PDA 10 stores the URL into a predetermined buffer (S28), before ending the processing. The predetermined buffer is provided on the EEPROM 39. If the judgement "NO" is given in step S27, the processing returns to step S25. Also, when step S29 or S30 ends, the processing returns to step S23.

### [1-4] Operation of the IC Card 11

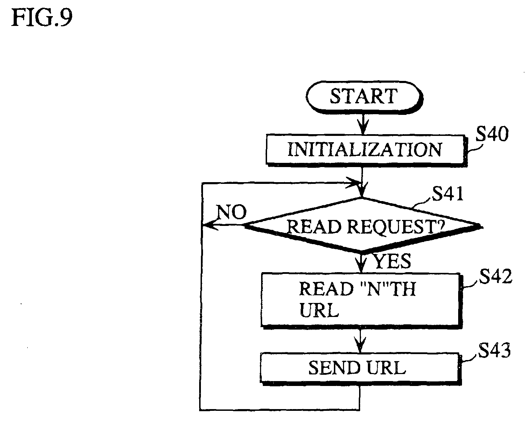

An operation of the IC card 11 is explained below. FIG. 9 is a flowchart showing the operation of the IC card 11. When the PDA 10 inputs the reset signal to reset the IC card 11, the IC card 11 reads a boot program stored in the ROM 43 and activates it (S40). After this, upon receiving the request to read the "N"th URL from the PDA 10 (S41), the IC card 11 reads the requested URL and its data length from a corresponding record in a URL memory buffer provided on the EEPROM 44 (S42), and sends the URL and the data length to the PDA 10 (S43).

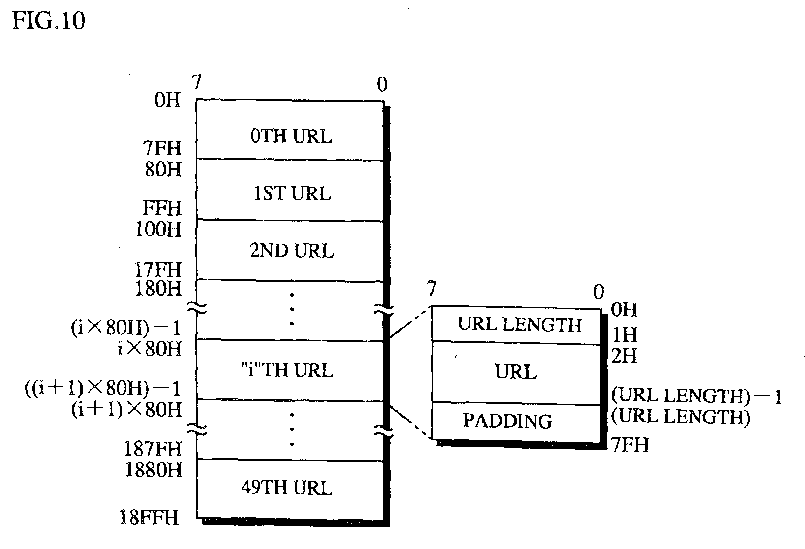

FIG. 10 shows the URL memory buffer provided on the EEPROM 44. The URL memory buffer is a buffer of 6400 bytes composed of fifty 128-byte records. Each record is made up of a 1-byte URL length field and a 127-byte URL field. URL information is stored from the first byte of the URL field, and the part of the URL field which is left unoccupied after storing the URL information is used as a padding unit storing zeros. The URL memory buffer has a predetermined address on the EEPROM 44 as its start address, and uses consecutive 6400 bytes beginning with the start address.

Upon receiving the request to read the "N"th URL from the PDA 10, the CPU 46 of the IC card 11 reads a URL length from a URL length field of the "N"th record in the URL memory buffer. The CPU 46 then reads data for the read URL length from a URL field of the "N"th record, and sends the read URL length and URL to the PDA 10.

### [1-5] Cooperative Operation of the PDA 10 and PC 13

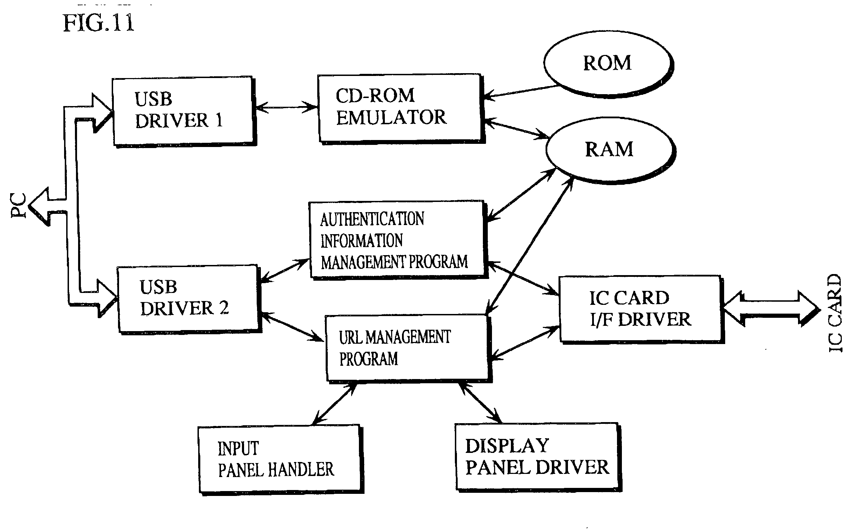

The following explains a cooperative operation of the PDA 10 and PC 13. FIG. 11 shows a software construction of the PDA 10. The PDA 10 is equipped with USB drivers 1 and 2, a CD-ROM emulator, a URL management program, and the like. This software construction can be roughly divided into two blocks. The first block includes the USB driver 1 and the CD-ROM emulator. When accessed by the PC 13, this block responds as if it were a CD-ROM device.

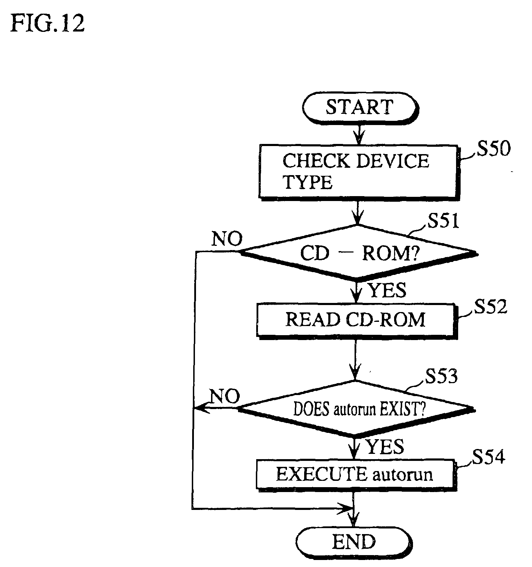

FIG. 12 is a flowchart showing an operation of the PC 13 when the PDA 10 is connected. When the PDA 10 is connected, the PC 13 checks the type of the connected device according to a predetermined procedure defined by the USB standard (S50). If the connected device is not a CD-ROM device (S51:NO), the PC 13 terminates the operation.

If the connected device is a CD-ROM device (S51:YES), the PC 13 reads the contents of a CD-ROM which is set in the CD-ROM device (S52). That is to say, the CD-ROM emulator in the PDA 10 sends data stored in the EEPROM 39 to the PC 13, as if the data were read from the CD-ROM.

The PC 13 examines the data, to find an automatic execution file named autorun.inf which is stored in a root folder of the CD-ROM. If autorun.inf cannot be found (S53:NO), the PC 13 terminates the operation. If autorun.inf is found in the root folder (S53:YES), the PC 13 executes the contents of autorun.inf (S54).

In more detail, the first line of autorun.inf stores a predetermined character string "[autorun]" which denotes an automatic execution file. The second line specifies, for example, a batch file name such as "open=autorun.bat". The contents of the batch file are "iexplore http://www.jpo.go.jp" as an example. Here, iexplore (iexplore is a registered trademark of Microsoft Corporation) is a command for activating the browser, with the URL read from the IC card 11 being indicated as an argument.

The second block includes the USB driver 2, an authentication information management program, the URL management program, and the like. The USB driver 2 drives the USB interface 33, and passes requests from the PC 13 to the URL management program or authentication information management program according to the contents of the requests. The USB driver 2 also passes data from the URL management program or authentication information management program to the PC 13.

The authentication information management program is a program that reads authentication information from the IC card 11 based on a request by the PC 13. When the PC 13 requests authentication information, the authentication information management program reads the authentication information from the IC card 11 through an IC card interface driver. The authentication information management program then sends the read authentication information to the PC 13 through the USB driver 2.

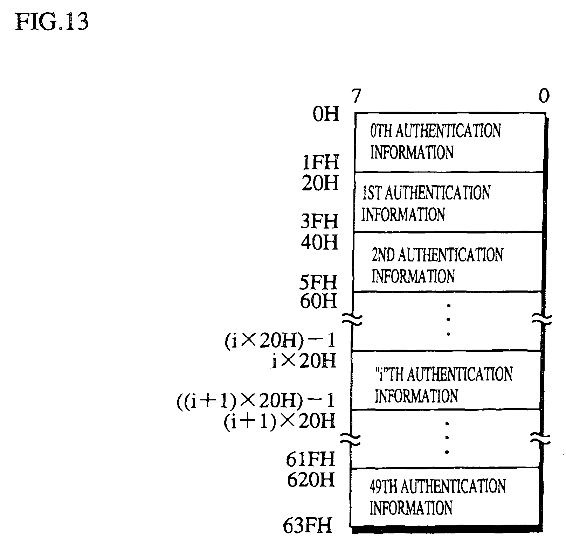

FIG. 13 shows an authentication information memory buffer that is provided on the EEPROM 44 of the IC card 11 and stores authentication information. In the drawing, the authentication information memory buffer has fifty records that are in a one-to-one correspondence with the records in the URL memory buffer. The authentication information memory buffer is a buffer of 1600 bytes where the size of each record is 32 bytes.

Each record stores authentication information, such as an account identifier and a password, that is requested when accessing a URL of a corresponding record in the URL memory buffer. Note that empty records store zeros. Like the URL memory buffer, the authentication information memory buffer has a predetermined address on the EEPROM 44 as its start address, and uses consecutive 1600 bytes beginning with the start address.

The URL management program is a program which executes the operation of FIG. 8. The predetermined buffer on the EEPROM 39 to which the URL is stored in step S28 is the automatic execution file autorun.inf. Which is to say, the URL management program stores the URL designated by the user of the PDA 10, into autorun.inf.

In this way, even if a desired URL is not registered in the PC 13, access to the URL can be automatically performed only by designating that URL in the PDA 10. Here, the designation of the URL can be done using only the cursor keys and OK button. This saves the inconvenience of typing the URL, thereby improving the ease with which the user designates the URL.

Also, when the terminal 2 accesses the home page of the server 4 and is asked to present authentication information, the authentication information is automatically sent from the IC card 11. This saves the inconvenience of typing the authentication information, no matter what size the authentication information is and what terminal is used to access the home page.

Furthermore, the server 4 has the terminal 2 read the authentication information from the IC card 11 using the browser, thereby eliminating the need for the user to type the authentication information. This prevents the authentication information which is being typed from being stolen by someone sneaking a look at it. Hence the level of security increases.

### [2] Second Embodiment

The following explains the second embodiment of the invention. A construction of an authentication system to which the second embodiment relates is roughly the same as that in the first embodiment.

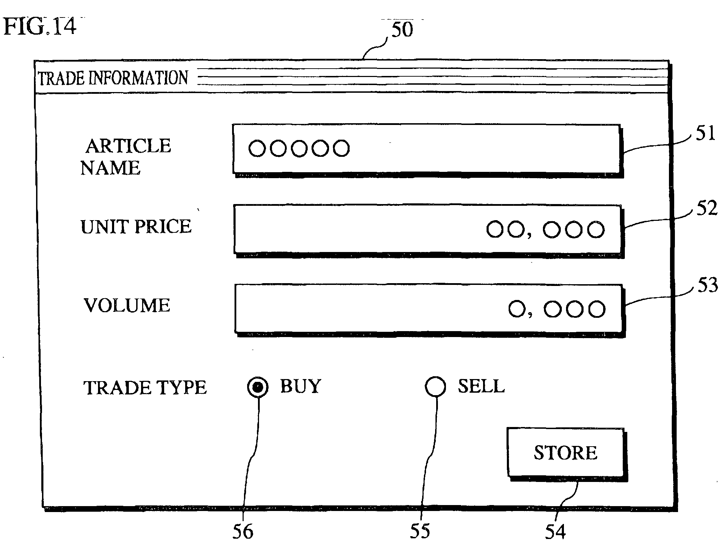

The server 4 provides EC services over the WWW, and has the browser of the terminal 2 display trade information. FIG. 14 shows an example display screen of trade information displayed by the browser. A trade information display screen 50 includes a text area 51 for displaying a name of an article, a text area 52 for displaying a unit price of the article, a text area 53 for displaying a trading volume, and radio buttons 55 and 56 for displaying the types of trading, each of which shows trade information. The trade information is stored in a corresponding variable. When the user clicks a STORE button 54, a Java applet that accompanies the trade information display screen 50 stores the trade information in the IC card 11.

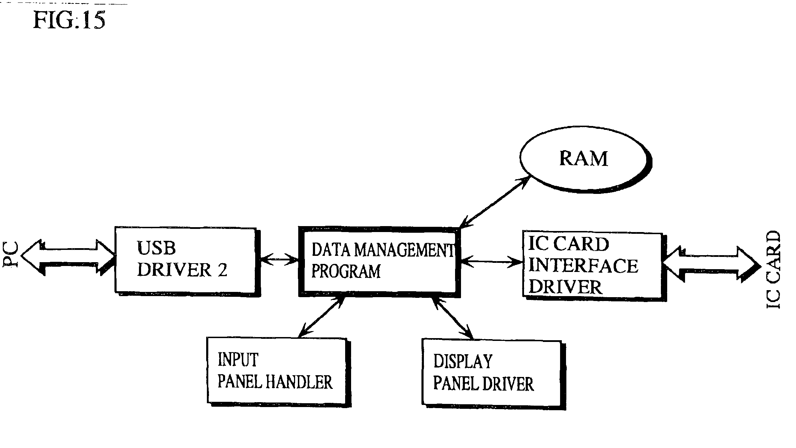

The request for storing the trade information is sent from the Java applet to the PDA 10 via the USB interface 33. The PDA 10 of this embodiment has a data management program in addition to the software shown in FIG. 11. FIG. 15 shows a software construction of the PDA 10 that particularly relates to the data management program. The data management program receives data from the PC 13 via the USB driver 2, and writes the data to the EEPROM 44 of the IC card 11 via the IC card interface driver.

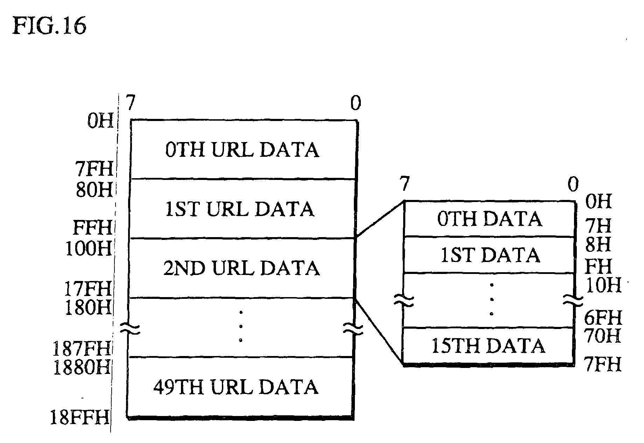

FIG. 16 shows a data memory buffer provided on the EEPROM 44. The data memory buffer has fifty records that are in a one-to-one correspondence with the records in the URL memory buffer. The data memory buffer is a buffer of 6400 bytes where the size of each record is 128 bytes. Each record has sixteen 8-byte data fields, and stores one set of data in each data field. The set of data is held in the form of ASCII.

When storing data to the data memory buffer, the data management program indicates a URL number (0 to 49) and a data number (0 to 15) and requests the data to be stored in 32-digit ASCII representation. Here, the URL number is the number of the URL which is designated by the user when accessing the home page, and the data number is one of the numbers which are assigned to sets of data received from the PC 13 in the reception order.

In this embodiment, an input panel hander in the PDA 10 has two modes, namely, a URL selection mode and a data display mode. When the UP button and the OK button 25 are simultaneously pressed on the input panel 31, the input panel handler switches one mode to the other. Here, the default is the URL selection mode. In the URL selection mode, information input from the input panel 31 is all sent to the URL management program. In the data display mode, information input from the input panel 31 is all sent to the data management program.

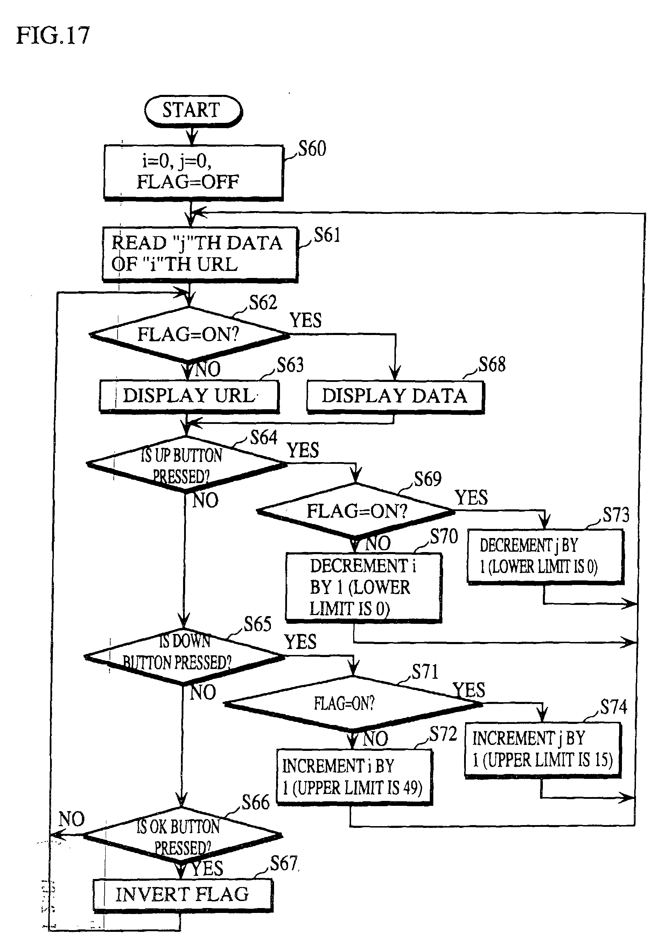

FIG. 17 is a flowchart showing an operation of the data management program when receiving input information from the input panel handler (i.e. when the input panel hander is in the data display mode). The data management program performs initialization, by setting variables i and j to 0 and a flag to OFF (S60). Variable i shows a URL number, whereas variable j shows a data number. Note that the display panel driver displays the "i"th URL on the display panel 20 when the flag is OFF, and displays the "j"th data in a record in the data memory buffer which corresponds to the "i"th URL (hereafter referred to as '"j"th data of the "i"th URL') when the flag is ON.

The data management program reads the "j"th data of the "i"th URL from the EEPROM 44 of the IC card 11, and stores it to the RAM 37 (S61). Here, if the flag is OFF (S62:NO), the "i"th URL is displayed on the display panel 20 (S63). If the flag is ON (S62;YES), on the other hand, the "j"th data of the "i"th URL is displayed on the display panel 20 (S68).

After this, if the UP button is pressed (S64:YES), the data management program checks the flag. If the flag is ON (S69:YES), the data management program decrements j by 1, where the lower limit is 0 (S73). If the flag is OFF (S69:NO), the data management program decrements i by 1, where the lower limit is 0 (S70).

When the result "NO" is given in step S64 and the DOWN button is pressed (S65:YES), the data management program checks the flag. If the flag is ON (S71:YES), the data management program increments j by 1, where the upper limit is 15 (S74). If the flag is OFF (S71:NO), the data management program increments i by 1, where the upper limit is 49 (S72). After any of steps S70 and S72-S74 ends, the operation returns to step S61.

When the result "NO" is given in step S65 and the OK button 25 is pressed (S66:YES), the data management program inverts the flag. Which is to say, if the flag is ON it is switched to OFF, whereas if the flag is OFF it is switched to ON. When the result "NO" is given in step S66 or after step S67 ends, the operation returns to step S62. In this way, desired data stored in the EEPROM 44 of the IC card 11 can be displayed on the display panel 20 of the PDA 10.

To refer to trade information in EC, the user conventionally has to either access a home page which shows the trade information or take hand-written notes when conducting the trade. According to this embodiment, however, the user can store the trade information onto the IC card 11 only by clicking a predetermined button on the page that displays the trade information. Also, the user can refer to the trade information anywhere and anytime, by inserting the IC card 11 into the PDA 10. This enables the storing and referencing of data to be conducted much more easily.

### [3] Modifications to the First and Second Embodiments

The following modifications to the first and second embodiments are possible.

### [3-1]

In the above embodiments, when the length of a URL or data displayed on the display panel 20 is larger than the length of the display panel 20, the input panel handler and the display panel driver may be used to scroll the display on the display panel 20 from side to side. Such a scroll operation can be made using the RIGHT and LEFT buttons.

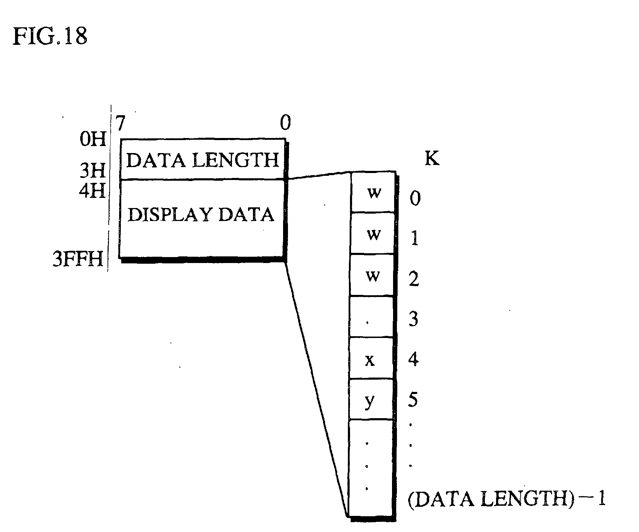

FIG. 18 shows a display data buffer held on the RAM 37 by the display panel driver. The display data buffer is used to store a URL or data which the URL management program or data management program requests to display. The display data buffer is made up of a data length field for storing a data length and a display data field for storing display data.

As one example, when the display panel 20 is capable of displaying 11 characters, the display panel driver displays the first 11 characters of the display data on the display panel 20 by default. Note here that the display data field stores only a resource name of the URL. In other words, the display data field does not store a protocol name ("http", "nttp", "ftp", "telnet", "file", etc.) and a delimiter ("://") that separates the protocol name from the resource name.

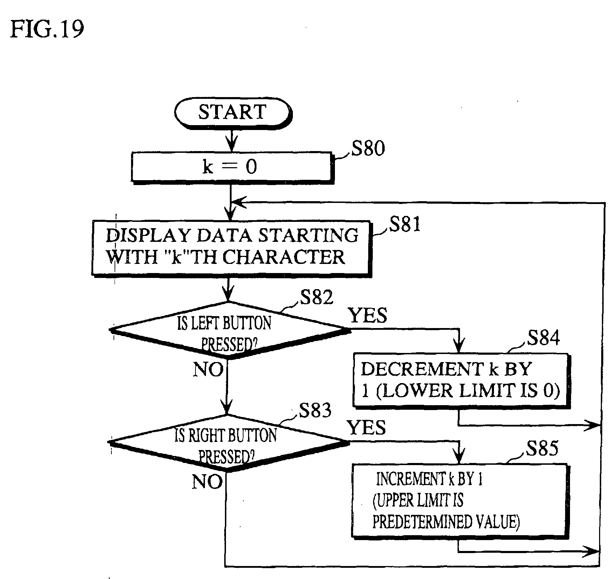

FIG. 19 is a flowchart showing an operation of the display panel driver which involves scroll operations. The display panel driver sets variable k to 0 (S80). Variable k specifies a position of the first character of a character string to be displayed on the display panel 20, in display data. The display panel driver then reads data that begins with the "k"th character in the display data and is equal to the length of the display panel 20, from the display data buffer. The display panel driver displays the read data on the display panel 20 (S81).

Following this, if the LEFT button is pressed (S82:YES), the display panel driver decrements k by 1, where the lower limit is 0 (S84). If the result "NO" is given in step S82 and the RIGHT button is pressed (S83:YES), the display panel driver increments k by 1, where the upper limit is a predetermined value (S85).

The predetermined value here is a value obtained by subtracting the length of the display panel 20 from the data length stored in the display data buffer. If the calculation result is a negative value, 0 is set as the predetermined value. After step S84 or S85 ends, the operation returns to step S81 to display data based on variable k.

In so doing, even when the URL or data to be displayed on the display panel 20 is long, the user can read the display data from beginning to end by means of scrolling.

### [3-2]

The above embodiments may be modified as follows. The server 4 has the user input authentication data for updating the authentication information, and sends new authentication information generated using the authentication data to the terminal 2. The terminal 2 stores the new authentication information to a corresponding record in the IC card 11.

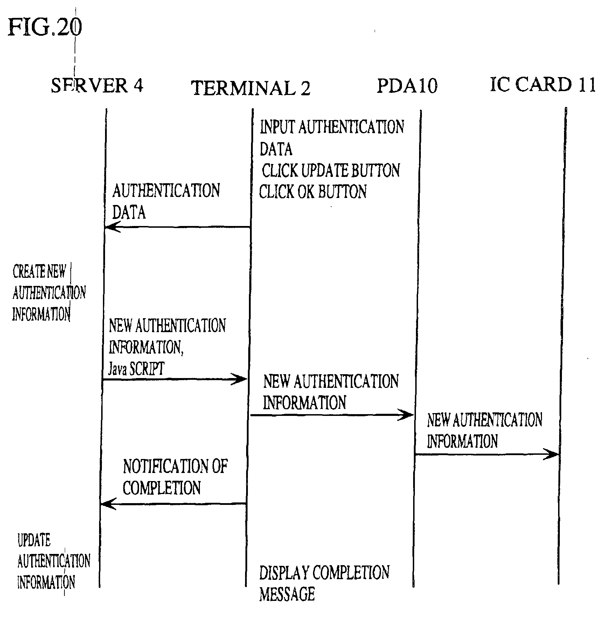

FIG. 20 is a sequence diagram showing a procedure of updating the authentication information. First, the server 4 has the terminal 2 display an authentication data input screen. The authentication data input screen includes text areas that are used for the user to input authentication data for updating authentication information. These text areas include a text area for inputting an address of the user and a text area for inputting a password.

The authentication data input screen also includes an UPDATE button. When the user clicks the UPDATE button after inputting the authentication data to the text areas, a confirmation window is displayed through a Java applet that accompanies the authentication data input screen. This window asks the user to input once again whether to update the authentication information using the input authentication data.

In other words, the confirmation window is provided with an OK button and a CANCEL button. If the user clicks the CANCEL button, the display returns to the authentication data input screen. If the user clicks the OK button, the input authentication data is sent to the server 4. Upon receiving the authentication data, the server 4 creates new authentication information using the authentication data, and sends the new authentication information to the terminal 2.

Here, the server 4 sends a Web page that contains the new authentication information and a Java applet for storing the new authentication information to the IC card 11, to the terminal 2. Upon receiving the Web page, the browser of the terminal 2 stores the new authentication information to a predetermined record in the authentication information memory buffer on the IC card 11, in accordance with the Java applet. Once the storing of the new authentication information to the IC card 11 has completed, the terminal 2 notifies the server 4 of the completion.

Upon being notified of the completion, the server 4 updates the authentication information by replacing it with the new authentication information. This new authentication information is put to use for subsequent authentication procedures. Meanwhile, having notified the server 4 of the completion, the terminal 2 displays a message indicating the completion of the authentication information update, according to the Java applet.

Here, the predetermined record in the authentication information memory buffer to which the new authentication information is stored may be a record corresponding to the URL which is designated by the user in step S6 shown in FIG. 6. As an alternative, the server 4 may send a URL together with the new authentication information to the terminal 2 so that the new authentication information is stored in a record corresponding to this URL.

Also, the authentication data input screen may be linked from the HTML document received in step S15 in FIG. 7, or from another Web page. In this way, authenticat ion information can be updated easily through the network. When doing so, authentication for the authentication information has been automatically performed beforehand as described in the above embodiments, so that the authentication information can be updated safely.

### [3-3]

The above embodiments describe the case where once the user has designated the URL the authentication information is automatically sent to the server 4. However, it is more preferable to employ a means of authentication, such as by setting a password in the PDA 10, to further enhance security.

The password can be set in the following manner. When the PDA 10 is activated, an authentication program stored in the ROM 38 is activated first, and accepts input of a password from the numeric keypad 22 or the like.

At this time, a number of predetermined symbols such as "-", that is equal to the total number of characters of the input password, are displayed on the display panel 20. Following this, when the OK button 25 is pressed, the authentication program verifies the input password against a password which is stored in the ROM 38 in advance. When they match, the user is permitted to proceed to a URL selection operation. When they do not match, the user is asked to input the password once again.

### [3-4]

The above embodiments describe the case where the IC card 11 is a contact-type IC card and the PDA 10 is a contact-type IC card reader/writer. However, the effects described in the embodiments can still be achieved even if they are contactless-type. Also, the above embodiments describe the case where the PDA 10 is connected to the PC 13 via the USB interface 33, but they may be connected using another type of interface. In such a case, it is preferable to employ an interface that *has* a plug-and-play function.

### [4] Third Embodiment

The following describes the third embodiment of the invention. A construction of an authentication system to which the third embodiment relates is roughly the same as that in the first embodiment, but the third embodiment has a notable feature relating to the handling of URL information. Accordingly, the third embodiment differs with the first embodiment in the structure of the URL memory buffer and the operation of the PDA 10.

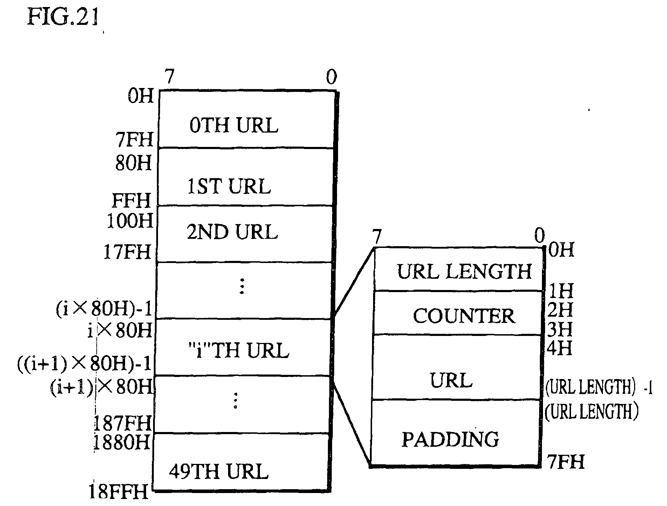

FIG. 21 shows a URL memory buffer provided on the EEPROM 44 in this embodiment. Like the URL memory buffer of the first embodiment, this URL memory buffer is a buffer of 6400 bytes made up of fifty 128-byte records. Each record is composed of a 1-byte URL length field, a 1-byte access counter, and a 126-byte URL field. URL information is stored from the first byte of the URL field.

The part of the URL field that is left unoccupied after storing the URL information is used as a padding unit storing zeros. The URL memory buffer has a predetermined address on the EEPROM 44 as its start address, and uses consecutive 6400 bytes beginning with the start address. Note that an integer from 0 to 126 is stored in the URL length field, while an integer from 0 to 255 is stored in the access counter.

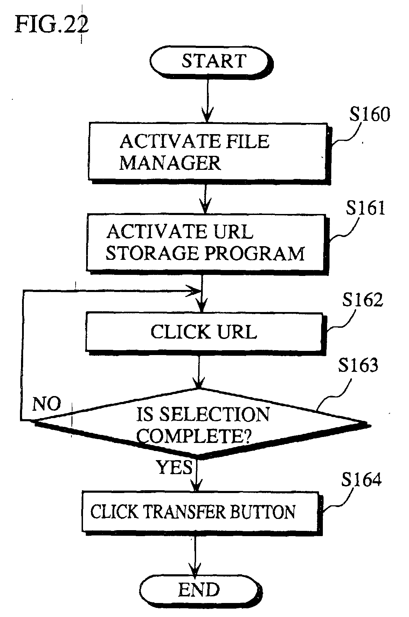

FIG. 22 is a flowchart showing an operational procedure for storing URLs to the URL memory buffer. First, the user activates a file manager (e.g. Explorer (registered trademark)) on the PC 13 (S160) . As a result, the contents of the EEPROM 39 in the PDA 10 are displayed on the file manager, as if electronic files stored in a CD-ROM set in a CD-ROM drive were displayed.

The user activates a URL storage program out of the displayed electronic files (S161). The URL storage program generates a window which displays a list of URLs registered by the browser on the PC 13. For example, in the case of Windows (Windows is a registered trademark of Microsoft Corporation), the URL storage program generates a window that displays a list of files which come under a folder "C:/Windows/Favorites".

The user clicks a URL which he/she wants to store in the IC card 11, among the displayed URLs. As a result, the display of the URL is inverted (S162). If URLs which the user wants to store are all displayed in inverse (S163:YES), the user clicks a TRANSFER button displayed on the window so that the URLs are stored in the IC card 11 (S164). If the judgement "NO" is given in step S163, the user returns to step S162 to click other URLs which he/she wants to store so that all desired URLs are displayed in inverse.

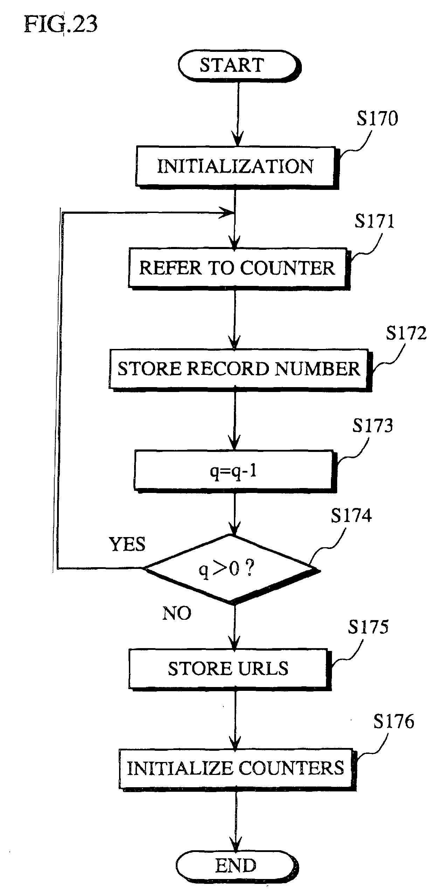

FIG. 23 is a flowchart showing an operation of the PDA 10 that is associated with the operation shown in FIG. 22. When requested to store Q URLs to the IC card 11 as a result of the above operation, the PDA 10 first sets variable q at Q, and clears a temporary buffer on the RAM 37 (S170). The PDA 10 then refers to the value of the access counter of each record in the URL memory buffer in the IC card 11 (S171), and stores the number of the record with the smallest access counter value into the temporary buffer (S172).

The PDA 10 decrements variable q by 1 (S173). If variable q is a positive value (S174:YES), the operation returns to step S171. If variable q is 0 (S174:NO), the PDA 10 stores the URLs whose storage is requested by the user, into URL fields of records specified by the numbers stored in the temporary buffer (S175). The PDA 10 then initializes the access counters of the records specified by the numbers stored in the temporary buffer, to 0 (S176).

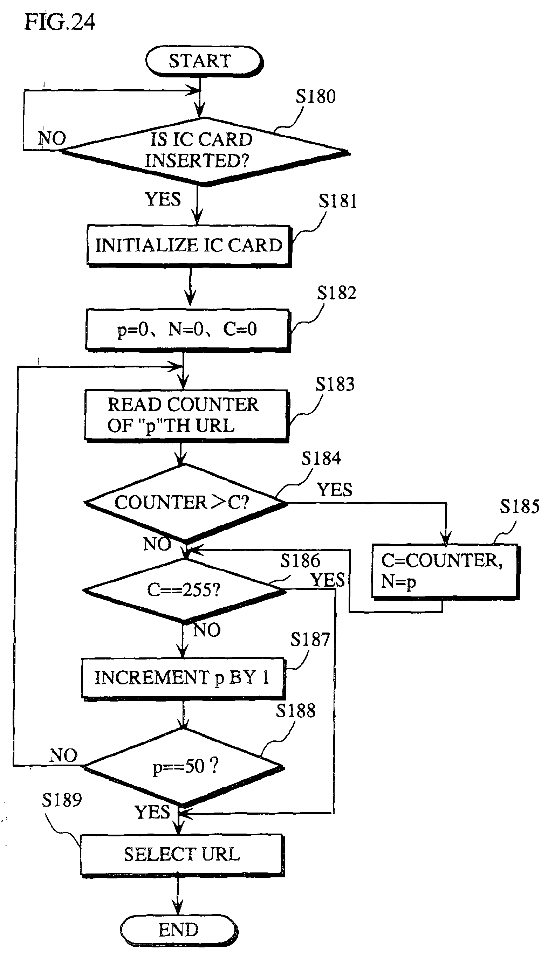

FIG. 24 is a flowchart showing an operation of the PDA 10 when designating a URL in this embodiment. When the IC card 11 is inserted (S180:YES), the PDA 10 initializes the IC card 11 (S181). Which is to say, the PDA 10 applies a circuit voltage to the Vcc terminal, and supplies a clock signal to the clock terminal. The PDA 10 then inputs a reset signal to the reset terminal of the IC card 11, to reset the CPU 46 of the IC card 11.

After this, the PDA 10 initializes internal counters p, N, and C to 0 (S182). The PDA 10 reads a counter value of the "p"th URL from the URL memory buffer of the IC card 11 (S183), and compares the read counter value with the value of counter C. If the read counter value is greater than counter C (S184:YES), the PDA 10 stores the read counter value to counter C, and the value of counter p to counter N (S185). If the judgement "NO" is given in step S184 or after step S185 ends, the value of counter C is compared with the access counter maximum value 255. If counter C reaches 255 (S186:YES), the operation proceeds to step S189.

If the judgement "NO" is given in step S186, the PDA 10 increments counter p by 1 (S187). After this, the PDA 10 compares the value of counter p with the value 50. If counter p is below 50 (S188:NO), the PDA 10 returns to step S183, judging that there still remain URLs which need be processed. If counter p is 50 (S188:YES), the PDA 10 proceeds to step S189, judging that all URLs have been processed.

The processing contents of step S189 are similar to steps S25-S30 of FIG. 8, but differs in part *of* step S28. Which is to say, in addition to storing the selected URL to the predetermined buffer, the access counter of the record in which the URL is stored is incremented by 1 where the upper limit is 255.

By doing so, URLs can be stored in the IC card 11 easily. Especially since new URLs are automatically stored to records with smaller access counter values, the contents of the IC card 11 can be updated while retaining frequently-accessed URLs.

### [5] Other Modifications

Although the present invention is described based on the first to third embodiments, the invention should not be limited to such. For example, the following modifications are applicable.

### [5-1]

The above embodiments describe the case where the PC 13 is provided with browser software and driver software beforehand. However, if the following construction is employed, the effects of the invention can still be achieved even when the PC 13 does not have necessary software other than CD-ROM driver software.

Installer software for installing necessary software programs is stored in the EEPROM 39 of the PDA 10 beforehand. When the PDA 10 is connected to the PC 13, the automatic execution file autorun.inf checks whether the necessary software programs are installed in the PC 13. If any of the software programs is not installed, the installer in the EEPROM 39 installs that software program into the PC 13.

In this way, even when some of the necessary software programs are not installed in the PC 13 beforehand, these software programs are automatically installed, thereby enabling the user to access desired URLs.

### [5-2]

Fingerprint authentication may be used instead of password authentication. For instance, a fingerprint reading device is provided on the back of the PDA 10. After power-up, the user presses his/her fingers to the fingerprint reading device so that the fingerprint reading device reads his/her fingerprint pattern. The read fingerprint pattern is compared with a fingerprint pattern which is stored in the ROM 38 beforehand. If they match, the user is permitted to proceed to a URL selection operation. Otherwise, the user is asked to fingerprint again.

As a result, the trouble of inputting a password is saved. Also, the use of fingerprinting effectively prevents unauthorized acts by malicious third parties. Here, it is more preferable to use a rewritable nonvolatile memory, such as an EEPROM, as the ROM 38 for storing a password or fingerprint pattern used for authentication.

### [5-3]

In the above embodiments, the PDA 10 emulates a CD-ROM device to have the PC 13 access a predetermined URL using autorun.inf. However, the PDA 10 may have the PC 13 execute the batch file stored in the EEPROM 39, instead of emulating a CD-ROM device.

The PDA 10 is capable of having the file manager (e.g. Explorer (registered trademark)) of the PC 13 display an electronic file that contains the batch file stored in the EEPROM 39. Therefore, the PDA 10 may have the PC 13 activate the batch file and access a desired URL. In this case, the batch file is given a description such as "iexplore http://www.jpo.go.jp".

By doing so, it becomes unnecessary to equip the PDA 10 with a CD-ROM emulator. As a result, the construction of the PDA 10 is more simplified, with it being possible to reduce manufacturing costs.

### [5-4]

In the above embodiments, autorun.inf is described as an example automatic execution file, but the invention is not limited to such. The effects of the invention may still be achieved if an automatic execution file other than autorun.inf is used for the terminal 2 to access a desired network object.

Although the present invention has been fully described by way of examples with reference to the accompanying drawings, it is to be noted that various changes and modifications will be apparent to those skilled in the art.

Therefore, unless such changes and modifications depart from the scope of the present invention, they should be construed as being included therein.

## Claims

1. A uniform resource locator (URL) input device comprising:
terminal device connecting means which is connected to a terminal device that accesses a network object;
URL reading means for reading a URL corresponding to the network object from a URL storage device; and
access facilitating means for facilitating the access by the terminal device, by having the terminal device use the read URL.

2. The URL input device of Claim 1,
wherein the URL storage device stores URLs that correspond to network objects,
the URL reading means reads the URLs from the URL storage device,
the URL input device further comprises:
URL displaying means for displaying the read URLs; and
URL selection accepting means for accepting a user's selection of the URL from the displayed URLs, and
the access facilitating means has the terminal device use the selected URL.

3. The URL input device of Claim 1 further comprising:
identification information accepting means for accepting identification information from a user; and
access prohibiting means for prohibiting the access facilitating means from facilitating the access by the terminal device, when the identification information is judged as being invalid.

4. The URL input device of Claim 2 further comprising:
identification information accepting means for accepting identification information from the user; and
URL display prohibiting means for prohibiting the URL displaying means from displaying the URLs, when the identification information is judged as being invalid.

5. The URL input device of Claim 1,
wherein the URL storage device is an IC card, and the URL input device is an IC card reader.

6. The URL input device of Claim 1 further comprising:
automatic execution file storing means for storing an automatic execution file; and
automatic execution file editing means for writing the read URL and a method for accessing the network object, in the automatic execution file,
wherein the access facilitating means has the terminal device use the read URL in accordance with the method written in the automatic execution file.

7. The URL input device of Claim 6,
wherein the automatic execution file is an autorun.inf file, and the access facilitating means is a CD-ROM emulator.

8. The URL input device of Claim 2 further comprising:
URL storing means for storing the URL into the URL storage device.

9. The URL input device of Claim 8,
wherein the URL storage device includes a URL storage buffer that is made up of URL storage areas which are each used to store a different one of the URLs, each URL storage area having a counter which shows a number of times the stored URL has been selected, and
the URL input device further comprises:
URL storage area selecting means for selecting a URL storage area whose counter shows the smallest number of the URL storage areas in the URL storage device, as a URL storage area to which the URL is to be stored;
counter initializing means for initializing the number shown by the counter of the URL storage area selected by the URL storage area selecting means; and
counter updating means for updating, once the URL storing means has stored the URL in the URL storage area, the number shown by the counter of the URL storage area each time the URL is selected.

10. A URL input system comprising:
the URL input device of Claim 1; and
a URL storage device.

11. The URL input system of Claim 10 further comprising:
a terminal device that is connected to the URL input device by terminal device connecting means, and accesses a network object corresponding to a URL.

12. An electronic authentication system comprising a server device, a terminal device, and an external storage device, the server device executing authentication, the terminal device being connected to the server device via a network, and the external storage device being connected to the terminal device,
the external storage device including:
authentication information storing means for storing authentication information,
the server device including:
authentication command sending means for sending an authentication command to the terminal device, the authentication command instructing the terminal device to read the authentication information from the external storage device and send the read authentication information to the server device; and
authentication information receiving means for receiving the authentication information from the terminal device, and
the terminal device including:
reading means for reading the authentication information from the external storage device according to the authentication command; and
sending means for sending the read authentication information to the server device according to the authentication command.

13. The electronic authentication system of Claim 12,
the external storage device further including:
URL storing means for storing a URL of the server device; and
access facilitating means for facilitating the terminal device's access to the server device, by having the terminal device use the URL stored in the URL storing means,
wherein when the server device is accessed by the terminal device, the authentication command sending means sends the authentication command to the terminal device.

14. The electronic authentication system of Claim 12,
the external storage device further including:
identification information accepting means for accepting identification information from a user; and
prohibiting means for prohibiting the sending means from sending the authentication information, when the identification information is judged as being invalid.

15. The electronic authentication system of Claim 12,
wherein the external storage device is removably connected to the terminal device.

16. The electronic authentication system of Claim 12,
wherein the external storage device is an IC card reader to which an IC card is inserted, and
the authentication information storing means stores the authentication information on the IC card.

17. The electronic authentication system of Claim 12,
the server device further including:
authentication data receiving means for receiving authentication data from the terminal device, the authentication data being used for updating the authentication information;
authentication information generating means for generating new authentication information using the authentication data; and
storage command sending means for sending the new authentication information and a storage command to the terminal device, the storage command instructing the external storage device to store the new authentication information, and
the terminal device further including:
authentication data sending means for sending the authentication data to the server device; and
storage instructing means for instructing the external storage device to store the new authentication information, according to the storage command.

18. The electronic authentication system of Claim 17,
the terminal device further including:
completion notifying means for notifying, once the storage of the new authentication information has completed, the server device of the completion,
wherein once the notification has been made by the completion notifying means, the server device uses the new authentication information instead of the authentication information, to execute authentication.

19. A data recording system comprising a server device, a terminal device, and an external storage device, the terminal device being connected to the server device via a network, and the external storage device being connected to the terminal device,
the server device including:
storage command sending means for sending a storage command to the terminal device, the storage command instructing the external storage device to store predetermined data,
the terminal device including:
storage instructing means for instructing the external storage device to store the predetermined data, according to the storage command, and
the external storage device including:
data storing means for storing the predetermined data, according to the instruction by the storage instructing means.

20. The data recording system of Claim 19,
the external storage device further including:
data displaying means for displaying the predetermined data stored by the data storing means.

21. The data recording system of Claim 20,
the external storage device further including:
identification information accepting means for accepting identification information from a user; and
display prohibiting means for prohibiting the data displaying means from displaying the predetermined data, when the identification information is judged as being invalid.

22. The data recording system of Claim 19,
wherein the external storage device is an IC card writer to which an IC card is inserted, and
the data storing means stores the predetermined data on the IC card.
